# DEMANDE DE BREVET EUROPEEN

(11) **EP 2 312 325 A1**
(43) Date de publication de la demande: **20.04.2011**
(21) Numéro de dépôt: 10187455.0
(22) Date de dépôt: 13.10.2010
(51) Int. Cl.: G01Q 40/00, G01Q 40/02

(54) **Procédé et structure de caractérisation d'une pointe de microscopie à force atomique**

(30) Priorité: 19.10.2009 FR 0957299
(71) Demandeur: Commissariat à l'Énergie Atomique et aux Énergies Alternatives, 75015 Paris (FR)
(72) Inventeur: Foucher, Johann, 38240, MEYLAN (FR); Faurie, Pascal, 38950, SAINT MARTIN LE VINOUX (FR)
(74) Mandataire: Lebkiri, Alexandre

(57) **Abrégé**

La présente invention concerne un procédé de caractérisation d'une pointe (205) de microscopie à force atomique au moyen d'une structure (200) de caractérisation présentant deux flancs inclinés (202, 203) se faisant face et dont on connait au moins une distance latérale réelle (CD1, CD2, CD3) séparant lesdits deux flancs inclinés correspondant à une hauteur donnée (h1, h2, h3). Le procédé selon l'invention comporte les étapes de balayage des surfaces des flancs inclinés (202, 203) par la pointe (205), ledit balayage étant réalisé alors que la pointe (205) oscille uniquement verticalement, de mesure, pour ladite hauteur donnée, de la distance latérale séparant les deux flancs inclinés (202, 203), ladite mesure intégrant la convolution de la forme de ladite pointe (205) avec la forme de ladite structure (200) de caractérisation et de détermination d'une dimension caractéristique (D) de ladite pointe (205) en fonction de ladite distance latérale mesurée et de ladite distance latérale réelle (CD1, CD2, CD3).

## Description

La présente invention concerne un procédé de caractérisation d'une pointe de microscopie à force atomique et une structure de caractérisation pour la mise en oeuvre de ce procédé.

La microscopie à force atomique (ou « AFM » : Atomic Force Microscopy, en langue anglaise) est une technique de microscopie à balayage développée à partir des années quatre-vingt et permettant d'atteindre une résolution à l'échelle atomique. Contrairement à la microscopie à balayage à effet tunnel, la microscopie à force atomique n'est pas limitée à la formation d'images de surfaces conductrices, ce qui la rend particulièrement adaptée à des matériaux isolants, semi-conducteurs, ainsi que des échantillons de nature biologique. Cette technique trouve des applications dans des nombreux domaines tels que l'industrie microélectronique ou la biologie. Le composant essentiel d'un microscope à force atomique conventionnel est une sonde constituée par un levier relié à une extrémité support et pourvu, à l'extrémité opposée, d'une pointe orientée vers la surface ou l'objet à observer. Le levier présente généralement une longueur de l'ordre de quelques dizaines ou centaines de micromètres, et la pointe un rayon de courbure de quelques dizaines de nanomètres. Une telle sonde, généralement constituée de silicium, peut être fabriquée par des techniques photolithographiques conventionnelles. Lorsque la pointe de la sonde est rapprochée d'une surface, elle subit l'influence de forces attractives ou répulsives de nature chimique, de Van der Waals, électrostatiques et/ou magnétiques. En mesurant ces forces pendant que la pointe balaye la surface de l'objet à observer, il est possible de reconstituer une image de ce dernier. La mesure des forces s'exerçant entre la pointe et l'objet peut s'effectuer de différentes manières. Selon la technique la plus simple et plus ancienne (AFM statique) on se limite à observer, notamment par des moyens optiques, la déflexion du levier encastré supportant la pointe. Ces moyens optiques comprennent typiquement une diode laser qui éclaire une surface réfléchissante du levier sous une incidence oblique et, un détecteur sensible à la position du faisceau réfléchi qu'il reçoit et donc capable de détecter les modifications d'orientation du faisceau dues aux déflexions du levier. Une meilleure sensibilité peut encore être obtenue en faisant vibrer ce levier selon l'un de ses modes propres, et en observant les variations de fréquence de résonance induites par les gradients des forces (AFM dynamique). Cette vibration est obtenue à l'aide d'un tube piézoélectrique relié au support.

Les pointes standards ont classiquement des formes coniques mais on comprend que ce type de pointe ne permet d'explorer que des reliefs sans surplombs tels que des formes en collines et vallées.

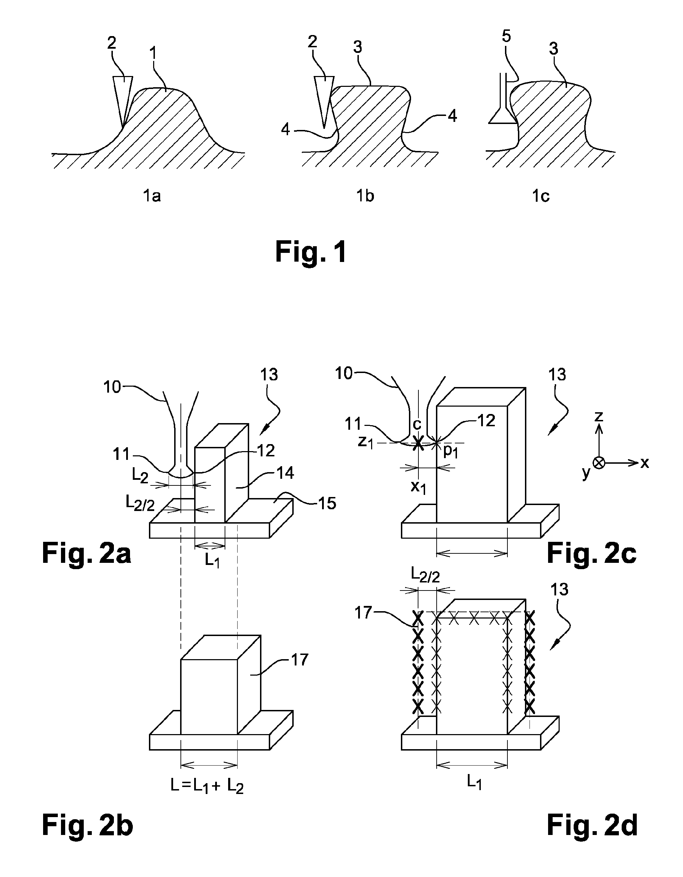

Une solution connue à ce problème consiste à utiliser des pointes de forme complexe, dites pointes CD (« Critical Dimension » en langue anglaise) permettant de mesurer des dimensions de reliefs complexes et notamment des reliefs présentant des surplombs. La figure 1a représente à titre d'exemple le principe de l'exploration d'un relief 1 sans surplomb par une pointe 2 simple conique. La figure 1b illustre la difficulté que pose l'exploration d'une forme 3 avec cavités ou surplombs par cette pointe 2 qui ne peut pas toucher les zones 4 au-dessous des surplombs. La figure 1c représente le principe de l'exploration d'un relief présentant des surplombs à l'aide d'une pointe évasée 5 CD à forme complexe (forme en patte d'éléphant à extrémité évasée pour venir toucher le relief sous le surplomb). La structure de la pointe 5 évasée permet d'explorer des reliefs complexes avec surplombs.

Pour les pointes simples comme pour les pointes complexes, le problème qui se pose est celui de la caractérisation intégrale (forme et dimensions) de la pointe utilisée. Cette étape de caractérisation est fondamentale pour la précision et la reproductibilité des mesures.

De façon connue, la caractérisation d'une pointe CD à forme complexe permettant la caractérisation d'objets en trois dimensions se fait à l'aide de deux structures de caractérisation distinctes en silicium, l'une permettant de déterminer le diamètre global de la pointe, l'autre permettant de déterminer sa forme.

Les figures 2a à 2d illustrent la manière de déterminer le diamètre global d'une pointe 10 évasée à forme complexe. Cette pointe 10 de forme complexe comporte deux pointes latérales en saillie 11 et 12 et est de section globalement circulaire ou elliptique. Le diamètre global de la pointe 10 correspond à la largeur L2 séparant les deux pointes latérales 11 et 12 en saillie l'une de l'autre ; en d'autres termes, le diamètre global de la pointe correspond au diamètre le plus grand de l'ensemble des sections horizontales de la pointe 10. La première structure 13 permettant de déterminer le diamètre de la pointe est constituée d'une ligne 14 en silicium possédant des flancs verticaux relativement lisses s'élevant au-dessus d'une surface 15 en Silicium. La structure de caractérisation 13 est également désignée par l'acronyme VPS (« Vertical Parallel Structure » en langue anglaise). La largeur L1 de la ligne 14 de cette structure VPS ayant été préalablement calibrée, celle-ci va servir à déterminer le diamètre global de la pointe. En effet, connaissant la dimension L1 de la ligne 14, si on scanne (ou balaye) cette structure 13 avec la pointe 10 à géométrie complexe, on obtient, après la mesure, une ligne 17 dont la taille virtuelle L (cf. figure 2b) est la somme de la largeur L1 de la ligne 14 et de la largeur réelle de la pointe L2. On parle de convolution de la pointe 10 avec la structure 13 de calibration (i.e. à partir du moment où on utilise une sonde pour mesurer la dimension d'un objet quelconque, la dimension de l'enveloppe externe de la sonde est intégrée dans la mesure). Le contour de déplacement suivi par la pointe 10 est donc un rectangle dont la largeur L n'est pas L1 mais L1 +L2. On peut ainsi en déduire la taille absolue de la pointe L2 = L ― L1. En effet, si on considère le point de contact p1 entre la pointe 10 et la structure 13 à une hauteur z1 (cf. figure 2c), la coordonnée en x retenue est la coordonnée x1 correspondant à un décalage d'un demi diamètre L2/2 par rapport au bord de la structure (l'origine du référentiel ou point de référence de la mesure AFM est en effet le centre C de la section circulaire ou elliptique passant par les deux pointes 11 et 12 en saillie). Par symétrie, il en est de même de l'autre côté de la structure à la même hauteur z1 . En balayant ainsi toute la structure 13 de calibration en x et z, on obtient (cf. figure 2d) en fin de mesure, la forme rectangulaire de la ligne virtuelle 17 représentée en figure 2b correspondant à la convolution de la pointe 10 avec la structure 13 de calibration dont la largeur finale obtenue est L= L1 + L2. On en déduit alors le diamètre de la pointe L2 = L ― L1.

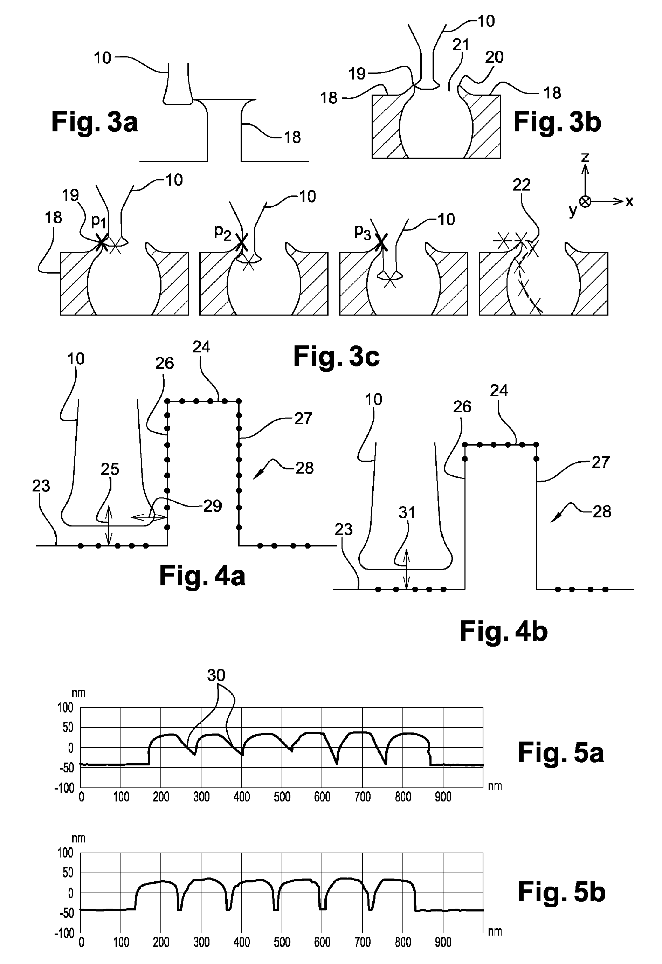

Les figures 3a à 3c illustrent la manière de déterminer, d'imager et de caractériser les côtés gauche et droit d'une pointe 10 évasée à géométrie complexe et d'avoir ainsi accès à la forme de cette pointe de manière quantitative à l'aide de grandeurs caractéristiques à l'aide d'une seconde structure 18 de caractérisation représentée en figure 3a. La figure 3b représente respectivement les parties droites et gauches de deux structures de caractérisation 18 disposées l'une à coté de l'autre et formant une cavité 21. La structure 18, dite structure lFSR (« Isolated Flared Silicon Ridge » en langue anglaise), possède un profil vertical réentrant. Afin d'obtenir une reconstruction très précise de la forme de la pointe 10, il est très important que les différentes régions de la pointe 10 soient en contact avec la structure 18 de caractérisation. Dans le cas idéal, ce point de contact sera unique pour chacun des côtés de la pointe. L'étape clef se situe donc au niveau de la réalisation des deux points de contact entre la structure et la pointe qui permettent la caractérisation intégrale de la géométrie de la pointe. Pour obtenir deux points de contact quasi ponctuels, les bords 19 et 20 des structures 18 sont légèrement remontants et amincis pour obtenir des rayons de courbures inférieurs à 10 nm (cf. figure 3b). Les points de contact entre la pointe 10 et la structure 18 peuvent alors être considérés comme quasi-ponctuels. Le contour suivi par la pointe 10 dans son déplacement permet de remonter à la forme de la pointe (par déconvolution avec la forme de la cavité et de ses surplombs). La reconstitution de la forme de la pointe est illustrée en figure 3c. A un point de contact précis pᵢ (i variant de 1 à 3 sur l'exemple de la figure 3c) entre la pointe et l'extrémité 19 de la structure 18 de caractérisation correspondra un couple de coordonnées (xᵢ;zᵢ). En faisant parcourir toute la structure 18 de caractérisation par la pointe 10, il est alors possible, en représentant tous ces couples de coordonnées, de remonter à la forme du côté gauche de la pointe 10 (cf. courbe 22). La même opération est réalisée symétriquement du côté droit de la pointe 10. La reconstitution de la forme se fait donc en déterminant une succession de coordonnées (xᵢ, zᵢ) des points de contact au fur et à mesure des déplacements de la pointe dans la cavité 21, et c'est la courbe formée par cette succession de coordonnées qui fait l'objet de la déconvolution. L'extrémité 19 ou 20 de la partie remontante de la structure de caractérisation 18 qui permet le contact entre la pointe et celle-ci doit être extrèmemement mince afin que le contact soit le plus ponctuel possible. Sans cela, la justesse et la reproductibilité de la mesure ne peuvent pas être de bonne qualité.

On notera que pour les deux structures de caractérisation (structure 13 représentée en figure 2a et structure 18 représentée en figure 3a), l'échantillonnage des prises de mesure du contour doit être suffisant (typiquement au moins un point par nanomètre) pour assurer une précision de reconstitution suffisante.

Le mode de balayage (désigné indifféremment par le terme « scan » par la suite) le plus utilisé pour la pointe AFM évasée à forme complexe pour la mesure d'objet à trois dimensions est le mode CD (« Critical Dimension » en langue anglaise) ou mode de dimension critique. De façon générale, la pointe est controlée par un tube piezo-électrique dans les trois directions de l'espace et peut osciller horizontalement et verticalement. Comme illustré sur la figure 4a, la pointe évasée 10 peut ainsi scanner les surfaces 23 et 24 planes et sensiblement horizontales du motif 28 en oscillant verticalement (double flèche 25) et scanner des flancs 26 et 27 sensiblement verticaux du même motif 28 en oscillant horizontalement (double flèche 29). La rétroaction se fait sur l'amplitude du levier de la pointe. Le principe de fonctionnement est le même pour l'oscillation verticale et horizontale en observant les variations de fréquence de résonance induites par les gradients des forces subies par la pointe au contact de la surface. L'avantage du mode CD est de pouvoir scanner les flancs des motifs précisément grâce à l'oscillation horizontale.

Le mode CD présente cependant certains inconvénients lorsqu'on cherche à caractériser des tranchées très étroites. En effet, lors de l'oscillation horizontale, la pointe 10 peut buter contre l'autre flanc pendant la mesure du premier flanc. Un tel contact de la pointe sur un flanc faisant face au flanc à mesurer va bien entendu perturber la mesure. Ce phénomène est illustré sur la figure 5a qui représente le profil d'une série de tranchées étroites (ayant chacune une largeur de l'ordre d'une quarantaine de nanomètres) mesurées en mode CD à l'aide d'une pointe évasée présentant un diamètre de l'ordre d'une trentaine de nanomètres. On comprend aisément qu'un diamètre de 30 nm oscillant horizontalement dans une tranchée de 40 nm risque d'entraîner une mesure erronée ; la figure 5a montre à cet effet des ruptures 30 de profils ne correspondant absolument pas aux profils des tranchées réelles à mesurer (tant en termes de profondeur que de forme des flancs à mesurer).

Une solution connue à ce problème consiste à utiliser un mode de balayage de type DT (« Deep Trench » en anglais). Dans ce mode, la pointe, dont la fréquence de résonance est la même qu'en mode CD (typiquement autour de 30kHz), oscille verticalement uniquement. De ce fait elle peut scanner des tranchées plus étroites que le mode CD. Ce phénomène est illustré sur la figure 5b qui représente le profil d'une série de tranchées étroites (ayant chacune une largeur de l'ordre d'une quarantaine de nanomètres) mesurées en mode DT à l'aide d'une pointe évasée présentant un diamètre de l'ordre d'une trentaine de nanomètres. Comme illustré sur la figure 4b, la pointe évasée 10 peut ainsi scanner les surfaces 23 et 24 planes et sensiblement horizontales du motif 28 en oscillant verticalement (double flèche 31) ; en revanche, elle ne peut pas scanner des flancs 26 et 27 sensiblement verticaux du même motif 28. On notera qu'aussi bien pour le mode DT que pour le mode CD, la fréquence de balayage n'est pas fixée (versus le mode dit « tapping » dans lequel on impose une fréquence de balayage et qui ne permet pas d'obtenir des mesures aussi précises que les modes CD ou DT). Seule la fréquence d'échantillonnage est imposée. En d'autres termes, on attend à chaque mesure, que la pointe revienne à son oscillation fondamentale non perturbée par l'influence des forces attractives ou répulsives générées lors de rapprochement avec la surface. On trouvera dans le document « Method for imaging sidewalls by atomic force microscopy » (Appl. Phys. Lett. 64 (19), 9 Mai 1994) une description des deux modes DT (désigné par le terme 1D dans ce document pour mentionner l'oscillation de la pointe dans une dimension de l'espace) et CD (désigné par le terme 2D dans ce document pour mentionner l'oscillation de la pointe dans deux dimensions de l'espace).

Le mode DT présente cependant également certaines difficultés. Ainsi, l'inconvénient majeur réside dans le fait que, sans contrôle de l'oscillation horizontale de la pointe, les flancs 26 et 27 à 90° ne peuvent pas être scannés. La structure de caractérisation VPS représentée en figure 2a ne peut donc pas être utilisée. Or si on utilise le mode DT pour faire une mesure, il convient d'utiliser le même mode pendant la caractérisation de la pointe afin d'être cohérent et de ne pas générer d'offset de mesure entre la caractérisation de la pointe et la mesure d'une structure.

On notera par ailleurs qu'une structure de caractérisation VPS utilisée en mode CD n'est évidemment pas adaptée à des pointes standards du type pointe conique ou cylindrique.

Dans ce contexte, la présente invention a pour but de fournir un procédé de caractérisation d'une pointe de microscopie à force atomique permettant de caractériser avec précision tout type de pointe AFM (évasée à forme complexe, conique ou cylindrique) en mode DT.

A cette fin, l'invention propose un procédé de caractérisation d'une pointe de microscopie à force atomique au moyen d'une structure de caractérisation présentant deux flancs inclinés se faisant face et dont on connait au moins une distance latérale réelle séparant lesdits deux flancs inclinés correspondant à une hauteur donnée de ladite structure, ledit procédé comportant les étapes suivantes :
- balayage des surfaces desdits flancs inclinés de la dite structure par ladite pointe, ledit balayage étant réalisé alors que ladite pointe oscille uniquement verticalement ;
- mesure, pour ladite hauteur h donnée, de la distance latérale séparant lesdits deux flancs inclinés, ladite mesure intégrant la convolution de la forme de ladite pointe avec la forme de ladite structure de caractérisation ;
- détermination d'une dimension caractéristique de ladite pointe en fonction de ladite distance latérale mesurée et de ladite distance latérale réelle.

On entend par pointe oscillant uniquement verticalement une pointe AFM fonctionnant en mode DT.

On entend par convolution le fait d'intégrer la dimension de l'enveloppe externe de la pointe dans la mesure réalisée. La mesure intégrant la convolution n'est donc pas une mesure réelle de la dimension de la structure de caractérisation.

Grâce à l'invention, on remplace avantageusement la structure de caractérisation VPS (structure à flancs verticaux) par une structure à flancs inclinés de sorte que la pointe, en oscillant verticalement uniquement puisse scanner la pente. Cette structure de caractérisation à flancs inclinés possède au moins une largeur connu reliant les flancs inclinés pour une hauteur donnée (largeur et hauteur obtenues par calibration de la structure, par exemple par une pointe de calibration fonctionnant en mode CD). On utilise ensuite ce couple (largeur, hauteur) de dimensions réelles ainsi que la mesure AFM de la structure de caractérisation réalisée à la même hauteur donnée pour déterminer une dimension caractéristique de la pointe AFM ; cette dimension caractéristique peut être typiquement le diamètre global de la pointe dans le cas d'une pointe évasée (diamètre le plus grand de l'ensemble des sections horizontales de la pointe), le diamètre de la pointe dans le cas d'une pointe cylindrique (diamètre de la section circulaire horizontale) ou le rayon de courbure de l'extrémité de la pointe dans le cas d'une pointe conique. Dans le cas d'une section elliptique, le diamètre est remplacé par le grand axe de l'ellipse.

En répétant le procédé selon l'invention dans le temps, on peut ainsi suivre l'usure de la pointe à caractériser.

Le procédé selon l'invention permet une caractérisation très précise, à quelque angströms près, de pointes AFM en mode DT ce qui permet d'avoir une meilleure justesse de mesure lorsque l'on mesure une structure en utilisant ce mode (il faut en effet déconvoluer au moins le diamètre de la pointe pour obtenir une mesure juste).

Le procédé selon l'invention permet par ailleurs de caractériser tous les types de pointes : pointes évasées, cylindriques et coniques alors que les caractérisations connues en mode CD permettent uniquement la caractérisation des pointes évasées.

Enfin, le fait de caractériser une pointe en mode DT est un mode de scan plus rapide que le mode CD. Ceci permet donc d'améliorer le rendement de l'équipement de mesure dans un contexte de production industrielle.

Le procédé selon l'invention peut également présenter une ou plusieurs des caractéristiques ci-dessous, considérées individuellement ou selon toutes les combinaisons techniquement possibles :
- ladite au moins une distance latérale réelle entre les flancs inclinés à une hauteur donnée est déterminée par une mesure de microscopie à force atomique réalisée au moyen d'un pointe de calibration différente de la pointe à caractériser, ladite pointe de calibration étant une pointe à forme complexe évasée de dimensions et de forme connues et oscillant horizontalement et verticalement (on entend par pointe évasée une pointe à forme complexe en patte d'éléphant à extrémité évasée comportant deux pointes latérales en saillie et de section circulaire ou elliptique) ;
- ladite mesure est réalisée pour une pluralité de hauteurs données, chaque hauteur correspondant à une distance latérale réelle connue séparant lesdits deux flancs inclinés ;
- ladite dimension caractéristique est :
   o le diamètre le plus grand de l'ensemble des sections circulaires horizontales de la pointe dans le cas d'une pointe à caractériser à forme complexe évasée ;
   o le diamètre de la section circulaire horizontale de la pointe dans le cas d'une pointe cylindrique ;
   o le rayon de courbure de l'extrémité de la pointe dans le cas d'une pointe conique ;
- ledit diamètre est obtenu en soustrayant la distance latérale réelle séparant lesdits deux flancs inclinés correspondant à une hauteur donnée à la distance latérale mesurée séparant lesdits deux flancs inclinés pour cette même hauteur ;
- ladite mesure est répétée au cours du temps de façon à suivre l'évolution de ladite dimension caractéristique en fonction du temps. La présente invention a également pour objet une structure de caractérisation de la pointe d'un microscope à force atomique pour la mise en oeuvre du procédé selon l'invention, ladite structure étant réalisée sur un substrat et comportant un premier flanc incliné d'un angle θ strictement compris entre 0 et 90° par rapport au plan principal du substrat et un deuxième flanc incliné du même angle que ledit premier flanc par rapport au plan principal du substrat, lesdits premier et deuxième flancs étant en regard l'un de l'autre.

La structure selon l'invention peut également présenter une ou plusieurs des caractéristiques ci-dessous, considérées individuellement ou selon toutes les combinaisons techniquement possibles :
De manière particulièrement avantageuse, la structure selon l'invention comporte :
   - un premier élément présentant une base supérieure sensiblement parallèle au substrat et une base inférieure sensiblement parallèle au substrat, lesdits premier et deuxième flancs inclinés joignant la base supérieure à la base inférieure ;
   - un deuxième élément situé sous ledit premier élément et au-dessus dudit substrat, ledit deuxième élément présentant des flancs sensiblement verticaux ;
les jonctions entre lesdits premier et deuxième flancs inclinés et la base inférieure formant deux parties en saillie d'angle d'ouverture θ.

Une telle disposition permet d'utiliser une seule est même structure pour caractériser le diamètre et la forme de la pointe ; ceci offre un gain de temps non négligeable en minimisant le nombre de lignes de balayage à effectuer ; à ce titre, on notera que l'un des inconvénients du procédé de caractérisation connu et décrit en référence aux figures 2a à 2d et 3a à 3c est qu'il nécessite deux structures de caractérisation différentes (VPS et lFSR) et que l'incertitude sur la mesure de forme est la somme des incertitudes liées à chacune des structures.

Selon un mode de réalisation particulièrement intéressant, ledit premier élément est réalisé dans un premier matériau et ledit deuxième élément est réalisé dans un deuxième matériau différent dudit premier matériau de sorte que lesdits premier et deuxième matériaux soient aptes à être gravés sélectivement l'un par rapport à l'autre. Il convient en effet de noter que les surplombs remontants des structures IFSR sont difficiles à réaliser, en particulier avec un rayon de courbure inférieur à 10 nm. Or un rayon de courbure trop important ne permet pas d'aboutir à une reconstruction exacte de la forme de la pointe lors de la déconvolution. La structure selon l'invention peut se fabriquer en faisant intervenir des étapes classiques en microélectronique de lithographie et de gravure Ainsi, le fait d'utiliser deux matériaux très sélectifs l'un par rapport à l'autre lors des étapes de gravure, pour la réalisation des parties haute et basse de la structure selon l'invention, permet d'obtenir des angles « vifs » de part et d'autre de la structure afin d'avoir une caractérisation plus fine de la forme des pointes.

Ledit premier matériau peut être du Si ou du SiGe.

Ledit premier matériau et ledit deuxième matériau peuvent être respectivement choisis parmi l'un des couples suivants :
- Si pour le premier matériau et SiGe pour le deuxième matériau ;
- SiGe pour le premier matériau et Si pour le deuxième matériau ;
- Si pour le premier matériau et SiO₂ pour le deuxième matériau.

Avantageusement, la hauteur dudit deuxième élément est choisie de sorte qu'elle est supérieure à la hauteur de la partie utile de la pointe à caractériser.

Préférentiellement, dans le cas d'une structure selon l'invention pour la caractérisation de la pointe d'un microscope à force atomique de forme conique, l'angle θ est choisie de façon à être inférieur à 90°-θ₁ où θ₁ est l'angle d'ouverture du cône.

Préférentiellement, la hauteur de la partie à flancs inclinés est choisie de façon à être strictement supérieure au rayon de courbure de la pointe à examiner.

D'autres caractéristiques et avantages de l'invention ressortiront clairement de la description qui en est donnée ci-dessous, à titre indicatif et nullement limitatif, en référence aux figures annexées, parmi lesquelles :
- les figures 1a à 1c illustrent schématiquement le principe de l'exploration d'un relief avec deux types de pointe en fonction de la nature du relief analysé ;
- les figures 2a à 2d illustrent un procédé connu de détermination du diamètre global d'une pointe évasée à forme complexe ;
- les figures 3a à 3c illustrent un procédé connu de détermination de la forme d'une pointe évasée à forme complexe ;
- la figure 4a illustre le principe du mode de balayage CD ;
- la figure 4b illustre le principe du mode de balayage DT;
- la figure 5a représente une mesure de tranchées étroites obtenue via un balayage en mode CD;
- la figure 5b représente une mesure de tranchées étroites obtenue via un balayage en mode DT ;
- la figure 6 représente les différentes étapes du procédé selon l'invention ;
- la figure 7 représente le principe de fonctionnement d'une structure de caractérisation pour la mise en oeuvre du procédé selon l'invention ;
- les figures 7a et 7b représentent l'évolution du diamètre d'une pointe à caractériser en fonction du numéro de la mesure ;
- la figure 8a représente un premier mode de réalisation d'une structure de caractérisation selon l'invention ;
- la figure 8b représente un second mode de réalisation d'une structure de caractérisation selon l'invention ;
- les figures 9a et 9b illustrent le principe de réalisation d'une structure telle que représentée en figure 8b ;
- la figure 10 illustre le principe d'utilisation d'une structure selon l'invention pour une pointe conique ;
- les figures 11 a à 11 d illustrent différentes configurations de la structure selon l'invention en fonction de la hauteur utile de la pointe à caractériser ;
- la figure 12 illustre un procédé pour reconstituer la forme d'une pointe conique et pour connaitre son rayon de courbure avec une structure selon l'invention ;
- la figure 13 illustre schématiquement les différentes étapes d'un exemple de procédé de réalisation d'une structure selon l'invention.

Dans toutes les figures, les éléments communs portent les mêmes numéros de référence.
Les figures 1a à 5b ont déjà été décrites précédemment en référence à l'état de la technique.

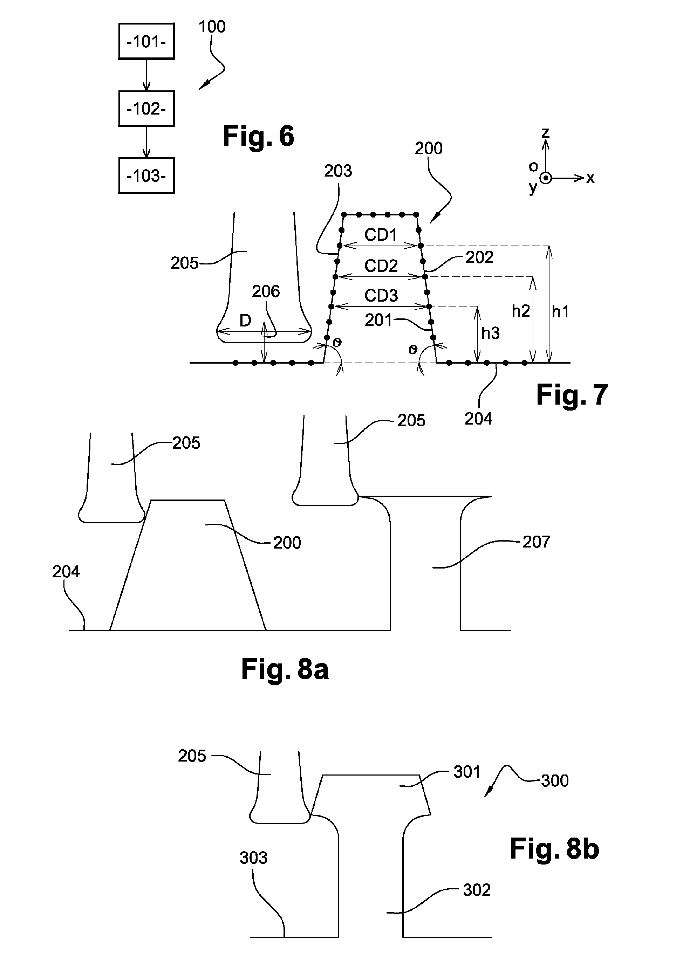

La figure 6 représente les différentes étapes du procédé 100 selon l'invention.

Le procédé selon l'invention est un procédé permettant la caractérisation d'une pointe AFM qui peut présenter des formes différentes (forme évasée, conique ou cylindrique); plus spécifiquement, comme nous l'avons mentionné précédemment en référence à l'état de la technique, il existe un mode de mesure dit DT (« Deep Trench ») en microscopie à force atomique particulièrement efficace pour mesurer des tranchées étroites à l'inverse de mode de type CD (« Critical Dimensions ») pour lequel la pointe de mesure oscille à la fois verticalement et horizontalement. Dans le mode DT, la pointe oscille uniquement verticalement. Le but du procédé selon l'invention est de permettre de caractériser efficacement et rapidement une pointe de mesure en mode DT (pour mémoire, si la mesure est effectuée avec une pointe en mode DT, cette même pointe doit avoir été caractérisée en mode DT afin de ne pas générer de décalage de mesure entre la caractérisation de la pointe et la mesure d'une structure à caractériser).

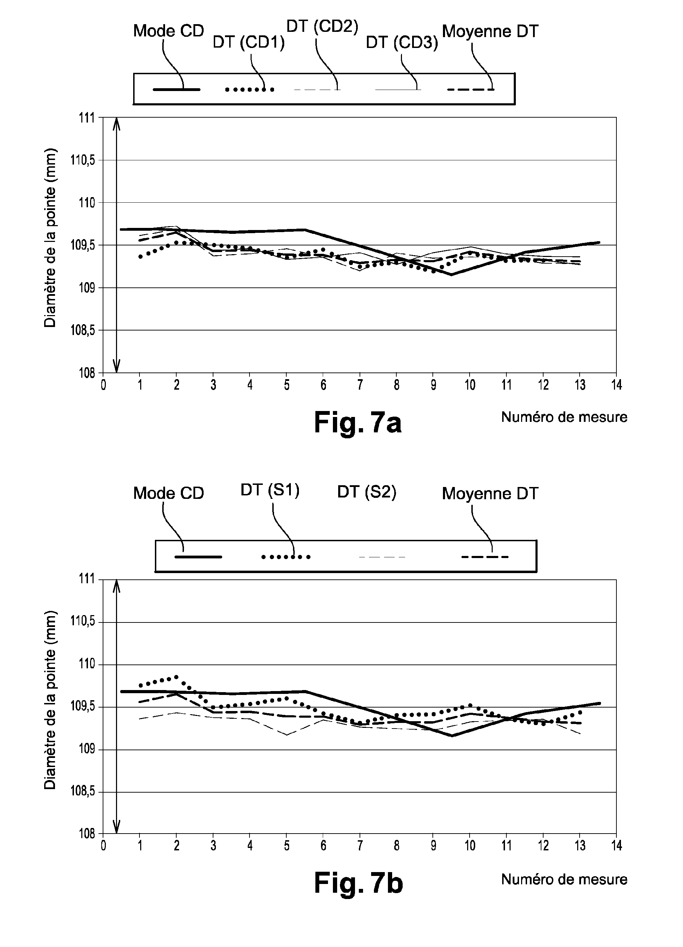

Le procédé selon l'invention utilise une structure 200 de caractérisation telle que représentée en figure 7. On se repérera dans ce qui suit par rapport à un repère orthonormé (Oxyz), le plan (Oxz) étant le plan de la feuille et le plan (Oxy) étant le plan horizontal. Cette structure 200 de forme sensiblement trapézoïdale comporte une partie 201 munie de deux flancs inclinés 202 et 203 relativement lisses s'élevant au dessus d'une surface 204, les deux plans inclinés 202 et 203 se faisant face. On entend par flancs inclinés 202 et 203 deux surfaces sensiblement lisses formant un angle θ strictement compris entre 0 et 90° avec la surface horizontal 204 parallèle au plan (Oxy).

La première étape 101 du procédé 100 va consister à déterminer une pluralité de dimensions latérales (ici trois dimensions latérales CD1, CD2 et CD3) correspondant chacune à une hauteur suivant l'axe z de la structure 200 (ici trois hauteurs h1, h2 et h3 correspondant respectivement aux dimensions latérales CD1, CD2 et CD3). On entend par dimension latérale, la distance suivant l'axe x séparant les plans inclinés 202 et 203 : en d'autres termes, les dimensions CD1, CD2 et CD3 correspondent aux largeurs de la structure 200 aux différentes hauteurs données h1, h2 et h3. Ces couples de données (CD1, h1), (CD2, h2) et (CD3, h3) peuvent être déterminés par une mesure AFM en mode CD à l'aide d'une pointe (non représentée) évasée à forme complexe, dite pointe de calibration, dont les dimensions et la forme sont parfaitement connues. Cette pointe de calibration est très peu utilisée de façon à éviter son usure (et à maintenir des dimensions et une forme constantes) et à permettre de déterminer de façon très précise les dimensions de la structure à caractériser.

La deuxième étape 102 du procédé 100 consiste à effectuer une mesure AFM de la structure 200 avec une pointe 205 à caractériser. On notera que la pointe 205 représentée en figure 7 est une pointe évasée à forme complexe mais le procédé selon l'invention s'applique également à des pointes de type conique ou cylindrique (ce qui n'est pas le cas des structures de caractérisation selon l'état de la technique du type VPS qui ne permettent pas de caractériser des pointes coniques ou cylindriques). Ici, la pointe 205 balaye la surface de la structure 200 en oscillant uniquement verticalement (selon la flèche 206 orientée suivant l'axe Oz).

Selon une étape 103 du procédé 100 selon l'invention, à une hauteur h donnée (par exemple h1), on mesure la largeur de la structure ; on obtient alors la somme de la largeur de la structure CD1 et du diamètre D de la pointe (on parle de convolution de la pointe 205 et de la structure 200) ; à cette valeur, on soustrait la largeur réelle (ici CD1) de la structure 200 obtenue pour la hauteur h1 donnée. On en déduit alors le diamètre D de la pointe 205. Il est bien entendu intéressant d'obtenir plusieurs séries de mesures à des hauteurs données différentes même si un seul couple (CD1, h1) permet de remonter au diamètre D de la pointe. On pourra choisir préférentiellement une largeur CD1 située à une hauteur élevée, une largeur CD2 située à une hauteur médiane et une largeur CD3 située à une hauteur basse.

On peut alors se servir de cette pointe 205 dont on connaît avec précision le diamètre D pour faire un certain nombre de mesures de structures nanométriques en mode DT. Afin de suivre l'usure de la pointe 205 au fil des mesures, cette étape de caractérisation du diamètre de la pointe 205 sera alors répétée. On contrôle ainsi en « temps réel » l'usure dans le temps de la pointe.

Afin de valider le procédé 100 de caractérisation à l'aide de la structure 200, les figures 7a et 7b représentent l'évolution du diamètre en nanomètres d'une pointe au fil des mesures. En parallèle à la caractérisation de cette pointe en mode DT sur une structure inclinée, nous avons représenté les valeurs de caractérisation du diamètre obtenu à l'aide du mode CD sur une structure verticale VPS standard. L'objectif est de montrer la pertinence du diamètre obtenu sur une structure inclinée en mode DT. Afin que cette caractérisation fonctionne également en mode CD, nous avons travaillé avec une pointe évasée (pouvant donc à la fois être caractérisée sur une structure verticale, ce qui n'est pas le cas pour une pointe cylindrique ou conique, et sur une structure inclinée selon l'invention). Sur la figure 7a, la caractérisation de la pointe a été réalisée 12 fois en mode DT sur une structure inclinée telle que la structure 200, en prenant en compte les diamètres obtenus à partir de différentes valeurs CD1 (moyenne du diamètre = 109,4nm), CD2 (moyenne du diamètre = 109,4nm) et CD3 (moyenne du diamètre = 109,4nm) ainsi que sur une structure VPS en mode CD (moyenne du diamètre = 109,5nm).

La figure 7a représente également la moyenne des trois courbes obtenues respectivement pour CD1, CD2 et CD3 (moyenne du diamètre = 109,4nm).

Sur la figure 7b, la caractérisation de la pointe a été réalisée 12 fois en mode DT sur deux structures S1 (moyenne du diamètre = 109,5nm) et S2 (moyenne du diamètre = 109,3nm) selon l'invention et présentant des dimensions différentes ainsi que sur une structure VPS en mode CD (moyenne du diamètre = 109,5nm).

La figure 7b représente également la moyenne des deux courbes obtenues respectivement pour S1 et S2 (moyenne du diamètre = 109,4nm).

On constate donc qu'il est alors tout à fait possible d'obtenir de très bons résultats dans tous les cas de figure. Les diamètres obtenus sur une structure inclinée en mode DT concordent très bien avec ceux obtenus en mode CD sur une structure verticale. Le gros avantage est que ce procédé de caractérisation est applicable non seulement pour des pointes évasées mais également pour des pointes cylindriques et coniques, ce qui n'est pas le cas en mode CD (incompatible avec les pointes cylindriques et coniques).

On notera que le procédé 100 selon l'invention représenté en figure 6 et illustré en référence à la figure 7 permet de déterminer en mode DT le diamètre de la pointe à caractériser ; en tant que tel, il ne permet de déterminer la forme de cette pointe. A ce stade, deux solutions sont possibles.

La première solution consiste à utiliser une structure IFSR 207 standard telle que représentée en figure 8a (en complément de la structure 200 selon l'invention) pour déterminer la forme de la pointe 205.

Une deuxième solution consiste à utiliser une structure unique 300 telle qu'illustrée en figure 8b pour déterminer à la fois le diamètre et la forme de la pointe évasée 205. La structure uniquement 300 comporte un premier élément 301 sensiblement identique à la structure 200 des figures 7 et 8a et un deuxième élément 302 située au-dessous du premier élément 301 et présentant la forme d'une structure lFSR. L'ensemble des premier et deuxième éléments est déposé sur un substrat 303. Comme nous l'avons déjà mentionné plus haut, il est très important d'obtenir deux points de contact quasi ponctuels pour les bords 306 et 307 de la structure 302 pour obtenir des rayons de courbures les plus faibles possibles. Nous allons voir dans ce qui suit que le fait d'utiliser une structure selon l'invention intégrant à la fois l'élément 301 permettant d'obtenir le diamètre de la pointe et l'élément 302 permettant d'obtenir la forme de la pointe va permettre d'améliorer notablement la quasi-ponctualité des contacts particulièrement utile pour la précision de la mesure.

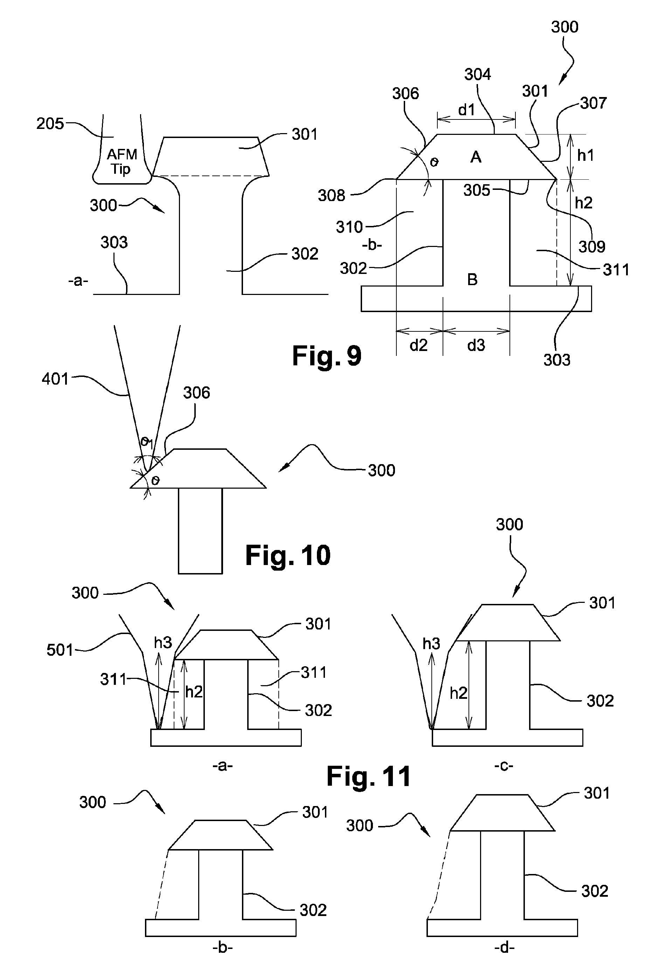

Les figures 9a et 9b illustrent à cet effet le principe de réalisation d'une telle structure. On retrouve sur la figure 9a la structure 300 unique telle qu'illustrée en figure 8b et en figure 9b, une représentation schématique des différents éléments de cette même structure 300.

Le premier élément 301 de forme trapézoïdale et de hauteur h1 comporte :
- une base supérieure 304 de largeur d1 sensiblement parallèle au substrat 303 horizontal ;
- une base inférieure 305 sensiblement parallèle au substrat 303 ;
- un premier et deuxième flancs inclinés 306 et 307 joignant la base supérieure 304 à la base inférieure 305.

Les jonctions entre les premier et deuxième flancs 306 et 307 inclinés et la base inférieure 305 forment deux parties 308 et 309 en saillie d'angle d'ouverture θ.

Le deuxième élément 302 de hauteur h2 situé sous le premier élément 301 et au-dessus du substrat 303 est formé par un mur (ou ligne) de largeur d3 à flancs verticaux. La largeur d3 du deuxième élément 302 est inférieure à la largeur de la base inférieure 305, ledit deuxième 302 étant sensiblement centrée sous la base inférieure de sorte que le premier élément 301 recouvre de part et d'autre du deuxième élément 302 deux zones 310 et 311 de largeur d2 sans matière (profil réentrant de la structure 300).

De manière préférentielle, la structure 300 sera réalisée à l'aide de deux matériaux A et B différents pour le premier élément 301 (réalisé à l'aide du matériau A) et le deuxième élément 302 (réalisé à l'aide du matériau B). Les matériaux A et B sont choisis de façon à pouvoir être gravés de manière très sélective l'un par rapport à l'autre lors des étapes de gravure plasma.

On pourra par exemple choisir un couple de matériaux tel que :
- le couple Si (A ou B) et SiGe (B ou A) qui peuvent être gravé de manière sélective,
- Si (A) et SiO2 (B) qui peuvent également être gravé de manière sélective.

Préférentiellement, le premier élément 301 utilisé pour la détermination du diamètre des pointes à caractériser sera en Si ou SiGe.

Le fait d'utiliser des matériaux A et B sélectifs permet d'obtenir des angles θ « vifs » de part et d'autre de la structure afin d'obtenir une caractérisation plus fine des formes des pointes. Les deux parties 308 et 309 en saillie d'angle d'ouverture θ vont en effet servir à déterminer la forme de la pointe. Les points de contact (308 et 309) entre la pointe à caractériser et la structure 300 peuvent alors être considérés comme ponctuels. Le contour suivi par la pointe dans son déplacement permettra alors de remonter à la forme de la pointe par déconvolution.

Typiquement, la largeur d1 de la base supérieure 304 sera étroitement liée à la largeur d2 des zones réentrantes 310 et 311. d1 sera également supérieure à la largeur d3 du deuxième élément 302 (largeur résiduelle de la structure 300 après gravure latérale équivalente à d2). En effet, pour des raisons de tenue mécanique, la largeur d3 ne sera pas trop inférieure à la largeur d2. Typiquement, la largeur d1 sera égale à 3 fois la largeur d2 et d2 sera supérieur au demi diamètre de la pointe. Par exemple, si on souhaite caractériser la forme d'une pointe évasée qui présente un diamètre de 120nm à l'aide des points de contact 308 et 309, il faudra prévoir une largeur d2 supérieure à 60nm (par exemple 70nm). Dans ce cas, la largeur d1 pourra typiquement être égale à trois fois d2 soit 21 0nm.

De la même manière, la hauteur h1 du premier élément 301 de la structure 300 va conditionner la qualité de détermination du diamètre des pointes. Cette hauteur h1 devra en effet être supérieure au rayon de courbure Rc des pointes à caractériser de manière à avoir suffisamment de points caractéristiques du diamètre de la pointe sur les flancs de la structure. Typiquement, Rc est de l'ordre de 20nm. On choisira alors une hauteur h1 de l'ordre de 80nm à 100nm.

On peut également adapter l'angle θ d'ouverture des deux parties 308 et 309 en saillie entre les premier et deuxième flancs 306 et 307 inclinés et la base inférieure 305, en particulier en vue d'améliorer la qualité de caractérisation de pointes cylindriques et coniques.

Pour une pointe cylindrique, il suffit que l'angle soit strictement inférieur à 90 ° (typiquement entre 80° et 85°).

Comme illustré en figure 10, pour une pointe conique 401 présentant un angle d'ouverture θ1, l'angle θ doit être inférieur à (90°-θ1) afin de conserver le contact du flanc 306 avec l'extrémité de la pointe 401.

Enfin, la hauteur h2 du deuxième élément est préférentiellement fixée par rapport à la hauteur utile h3 de la pointe à caractériser. En effet, l'objectif des zones réentrantes 310 et 311 de la structure 300 est de caractériser la forme de la pointe et donc entre autre sa longueur utile h3. Comme le montre les figures 11a et 11b, si la hauteur h2 est inférieure à la longueur utile h3 de la pointe (ici une pointe conique 501), il sera alors impossible de suivre l'usure de la pointe 501 en deux dimensions. Il sera uniquement possible de suivre l'usure du diamètre mais pas l'usure de la longueur utile h3. A l'inverse dans le cas des figures 11c et 11d, la hauteur h2 de la structure est supérieure à la longueur utile h3 ce qui rend alors possible la caractérisation de cette longueur et donc le suivi de l'usure dans le temps de cette longueur.

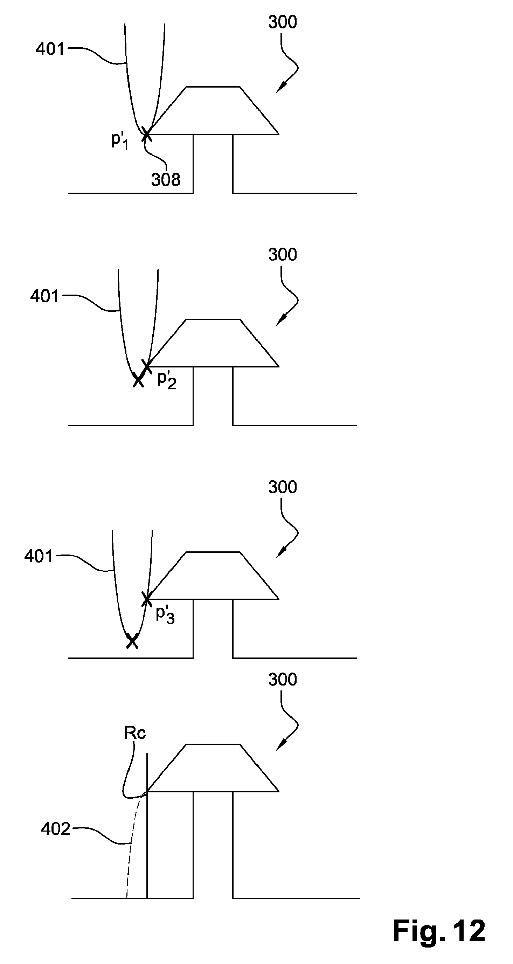

La figure 12 illustre la manière de reconstituer la forme d'une pointe conique 401 et donc la possibilité de connaitre son rayon de courbure Rc avec une structure 300 selon l'invention.

Le point de contact 308 entre la pointe conique 401 et la structure 300 peut être considéré comme ponctuel. Le contour suivi par la pointe 401 dans son déplacement permet de remonter à la forme de la pointe conique 401. A un point de contact précis p'ᵢ (i variant de 1 à 3 sur l'exemple de la figure 12) entre la pointe conique 401 et la pointe 308 de la structure 300 de caractérisation correspondra un couple de coordonnées (xᵢ;zᵢ). En faisant parcourir toute la structure 300 de caractérisation par la pointe 401, il est alors possible, en représentant tous ces couples de coordonnées, de remonter à la forme du côté droit de la pointe 401 (cf. courbe 402). La même opération est réalisée symétriquement du côté gauche de la pointe 401. La reconstitution de la forme se fait donc en déterminant une succession de coordonnées (xᵢ, zᵢ) des points de contact au fur et à mesure des déplacements de la pointe conique 401 au contact de la pointe 308. Une fois, la courbe 402 obtenue, on peut aisément déterminer le rayon de courbure Rc de la pointe conique 401.

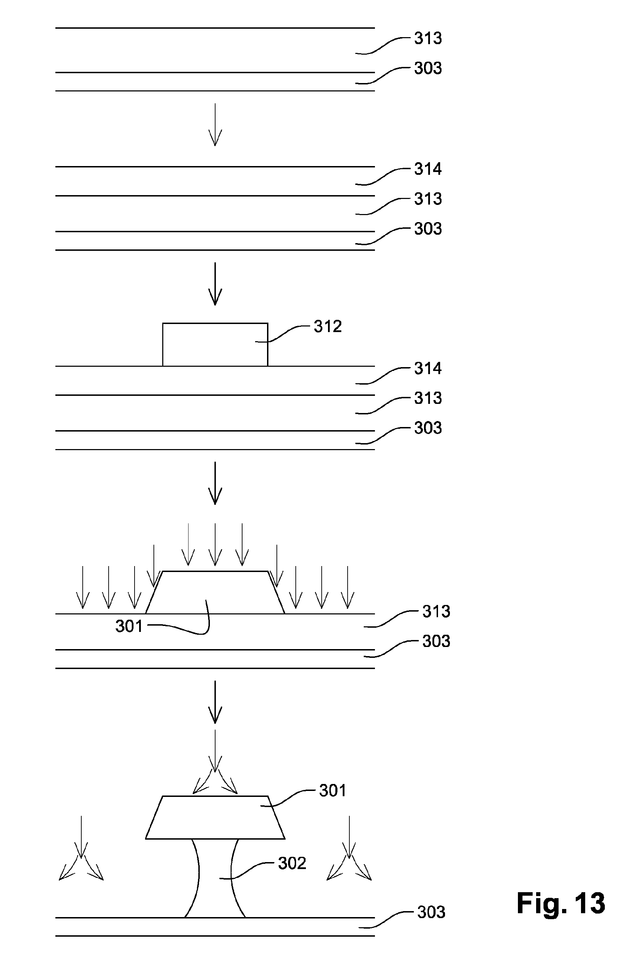

La structure 300 selon l'invention peut être obtenue à partir d'étapes classiques de lithographie et de gravure plasma qui interviennent dans l'industrie du semiconducteur. La figure 13 illustre schématiquement les différentes étapes d'un exemple de procédé de réalisation d'une telle structure 300. On part typiquement du substrat 303 sur lequel on vient réaliser le dépôt d'une couche 313 du matériau B puis le dépôt d'une couche 314 du matériau A.

On réalise ensuite une étape de photolithographie à l'aide d'un masque 312 de façon à obtenir un motif en matériau A.

On effectue ensuite une gravure anisotrope du matériau A (sélective par rapport au matériau B) à pentes contrôlées de manière à obtenir le premier élément trapézoïdal 301 puis une gravure isotrope du matériau B (sélective par rapport au matériau A) de manière à obtenir le deuxième élément 302 présentant la forme d'une structure lFSR.

## Revendications

1. Procédé (100) de caractérisation d'une pointe (205) de microscopie à force atomique au moyen d'une structure (200) de caractérisation présentant deux flancs inclinés (202, 203) par rapport au plan de la surface du substrat de la structure, lesdits flancs inclinés se faisant face, et dont on connait au moins une distance latérale réelle (CD1, CD2, CD3) parallèle au plan de la surface du substrat de la structure, séparant lesdits deux flancs inclinés correspondant à une hauteur donnée (h1, h2, h3) de ladite structure (200), ledit procédé comportant les étapes suivantes :
- balayage (102) des surfaces desdits flancs inclinés (202, 203) de la dite structure (200) par ladite pointe (205), ledit balayage étant réalisé alors que ladite pointe (205) oscille uniquement verticalement perpendiculairement par rapport au plan de la surface du substrat de la structure ;
- mesure (102), pour ladite hauteur donnée, de la distance latérale parallèle au plan de la surface du substrat de la structure, séparant lesdits deux flancs inclinés (202, 203), ladite mesure intégrant la convolution de la forme de ladite pointe (205) avec la forme de ladite structure (200) de caractérisation ;
- détermination (103) d'une dimension caractéristique (D) de ladite pointe (205) en fonction de ladite distance latérale mesurée et de ladite distance latérale réelle (CD1, CD2, CD3).

2. Procédé (100) selon la revendication précédente **caractérisé en ce que** ladite au moins une distance latérale réelle (CD1, CD2, CD3) entre les flancs inclinés (202, 203) à une hauteur donnée (h1, h2, h3) est déterminée (101) par une mesure de microscopie à force atomique réalisée au moyen d'un pointe de calibration différente de la pointe (205) à caractériser, ladite pointe de calibration étant une pointe à forme complexe évasée de dimensions et de forme connues et oscillant horizontalement et verticalement.

3. Procédé selon l'une des revendications précédentes **caractérisé en ce que** ladite mesure est réalisée pour une pluralité de hauteurs données (h1, h2, h3), chaque hauteur correspondant à une distance latérale réelle connue (CD1, CD2, CD3) séparant lesdits deux flancs inclinés (202, 203).

4. Procédé selon l'une des revendications précédentes **caractérisé en ce que** ladite dimension caractéristique est :
- le diamètre le plus grand de l'ensemble des sections circulaires horizontales de la pointe dans le cas d'une pointe à caractériser à forme complexe évasée ;
- le diamètre de la section circulaire horizontale de la pointe dans le cas d'une pointe cylindrique ;
- le rayon de courbure de l'extrémité de la pointe dans le cas d'une pointe conique.

5. Procédé selon la revendication précédente **caractérisé en ce que** ledit diamètre est obtenu en soustrayant la distance latérale réelle séparant lesdits deux flancs inclinés correspondant à une hauteur donnée à la distance latérale mesurée séparant lesdits deux flancs inclinés pour cette même hauteur.

6. Procédé selon l'une des revendications précédentes **caractérisé en ce que** ladite mesure est répétée au cours du temps de façon à suivre l'évolution de ladite dimension caractéristique en fonction du temps.

7. Structure (300) de caractérisation de la pointe d'un microscope à force atomique pour la mise en oeuvre du procédé selon l'une des revendications 1 à 6, ladite structure (300) étant réalisée sur un substrat (303) et comportant un premier flanc incliné (306) d'un angle θ strictement compris entre 0 et 90° par rapport au plan principal du substrat (303) et un deuxième flanc (307) incliné du même angle que ledit premier flanc (306) par rapport au plan principal du substrat (303), lesdits premier et deuxième flancs (306, 307) étant en regard l'un de l'autre, ladite structure comportant :
- un premier élément (301) présentant une base supérieure (304) sensiblement parallèle au substrat (303) et une base inférieure (305) sensiblement parallèle au substrat (303), lesdits premier et deuxième flancs inclinés (306, 307) joignant la base supérieure (304) à la base inférieure (305) ;
- un deuxième élément (302) situé sous ledit premier élément (301) et au-dessus dudit substrat (303), ledit deuxième élément (302) présentant des flancs sensiblement verticaux.
les jonctions entre lesdits premier et deuxième flancs inclinés et la base inférieure formant deux parties (308, 309) en saillie d'angle d'ouverture θ.

8. Structure (300) selon la revendication 7 **caractérisée en ce que** ledit premier élément est réalisé dans un premier matériau (A) et ledit deuxième élément est réalisé dans un deuxième matériau (B) différent dudit premier matériau (A) de sorte que lesdits premier et deuxième matériaux (A, B) soient aptes à être gravés sélectivement l'un par rapport à l'autre.

9. Structure (300) selon la revendication 8 **caractérisée en ce que** ledit premier matériau est du Si ou du SiGe.

10. Structure (300) selon la revendication 9 **caractérisée en ce que** le premier matériau et le deuxième matériau sont respectivement choisis parmi l'un des couples suivants :
- Si pour le premier matériau et SiGe pour le deuxième matériau ;
- SiGe pour le premier matériau et Si pour le deuxième matériau ;
- Si pour le premier matériau et SiO₂ pour le deuxième matériau.

11. Structure (300) selon l'une des revendications 7 à 10 **caractérisée en ce que** la hauteur (h2) dudit deuxième élément (302) est choisie de sorte qu'elle est supérieure à la hauteur (h3) de la partie utile de la pointe (501) à caractériser.

12. Structure (300) selon l'une des revendications 7 à 11 pour la caractérisation de la pointe (401) d'un microscope à force atomique de forme conique **caractérisée en ce que** l'angle θ est choisie de façon à être inférieur à 90°-θ₁, où θ₁ est l'angle d'ouverture du cône.

13. Structure (300) selon l'une des revendications 7 à 12 **caractérisée en ce que** la hauteur (h1) de la partie à flancs inclinés est choisie de façon à être strictement supérieure au rayon de courbure de la pointe à examiner.
